# EUROPEAN PATENT SPECIFICATION

(11) **EP 1 935 721 B1**
(45) Date of publication and mention of the grant of the patent: **02.12.2009**
(21) Application number: 07024417.3
(22) Date of filing: 17.12.2007
(51) Int. Cl.: B60R 1/08

(54) **Indirect visual device of vehicle**
Indirektes Sichtgerät eines Fahrzeugs
Dispositif de vue indirecte de véhicule

(30) Priority: 19.12.2006 JP 2006341301; 30.11.2007 JP 2007311353
(43) Date of publication of application: 25.06.2008
(73) Proprietor: HONDA MOTOR CO., LTD., Tokyo 107-8556 (JP)
(72) Inventor: Uematsu, Hiroshi, Wako-shi Saitama 351-0193 (JP); Hashimoto, Toshihiro, Wako-shi Saitama 351-0193 (JP)
(74) Representative: Prechtel, Jörg

(56) References cited:
- DE-A1- 2 552 267
- DE-A1- 2 915 580
- DE-C1- 19 627 417
- US-A1- 2004 190 166
- US-A1- 2005 083 577

## Description

### BACKGROUND OF THE INVENTION

### Field of the Invention

The present invention relates to an indirect visual device of a vehicle with the features of the preamble part of claim 1, for example, a side mirror which provides a side or rear visual field with respect to a vehicle by means of a reflecting mirror.

### Description of the Related Art

Generally, a mirror surface of an indirect visual device (e.g., a side mirror) in a vehicle has a substantially constant radius of curvature. In such an indirect visual device, the visible range obtained by the mirror surface is restricted. Therefore, a modification has been proposed, in which the radius of curvature is partially varied, so as to enlarge the visible range (see, for example, Japanese Unexamined Patent Application, First Publication No. H8-108800.

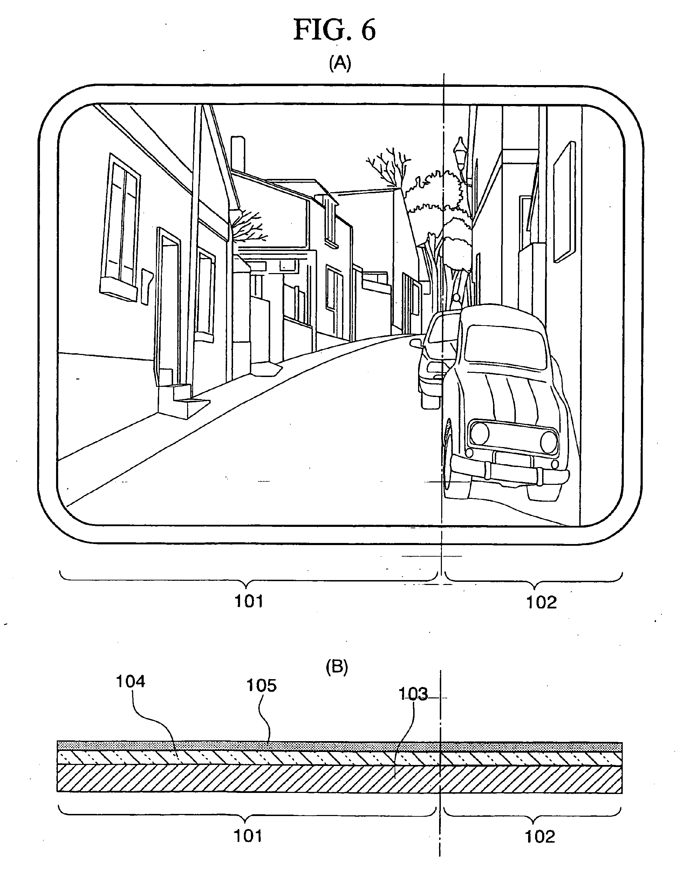

As shown in Fig. 6, the mirror surface of the disclosed indirect visual device has a constant curvature part 101, which has a substantially constant radius of curvature, and a gradually-varying curvature part 102, which joins an end of the constant curvature part 101 and whose radius of curvature gradually decreases toward an end of this part, so as to observe a wide-angle range, which cannot be easily observed via the constant curvature part 101.

However, in the above conventional indirect visual device, the constant curvature part 101 and the gradually-varying curvature part 102 are not separated from each other, and the boundary therebetween is visually unclear. Therefore, it is difficult to judge whether each image reflected on the mirror surface is obtained through the constant curvature part 101 or the gradually-varying curvature part 102, and thus difficult to accurately judge the direction or distance with respect to a subject observed through the mirror surface.

Document US 2004/190166 A1 discloses an indirect visual device with all features of the preamble of claim 1, wherein a demarcation element such as a becel is provided between the constant curvature part and the gradually varying curvature part, and wherein the constant curvature part and/or the gradually varying curvature part comprise a variable reflectance electro-optic element such as an electrochromic mirror.

However, the visibility of such a demarcation element depends on the lightning conditions and can considerably deteriorate at dawn or during the night. Furthermore, the use of electrochromic mirrors requires additional components such as photosensors and control electronics.

### SUMMARY OF THE INVENTION

In light of the above circumstances, an object of the present invention is to provide an indirect visual device of a vehicle, for helping an occupant of the vehicle, who looks at a relevant mirror surface, to easily judge whether the occupant observes a subject through a constant curvature part or a gradually-varying curvature part.

Therefore, the present invention provides an indirect visual device (e.g., a door mirror 10 in an embodiment explained later) of a vehicle, comprising:
a reflecting mirror (e.g., a reflecting mirror 11 in the embodiment) including a constant curvature part (e.g., a constant curvature part 12 in the embodiment), which has a substantially constant radius of curvature over the mirror surface, and a gradually-varying curvature part (e.g., a gradually-varying curvature part 13 in the embodiments), which joins the constant curvature part, and whose radius of curvature gradually decreases toward an end of this part, wherein
the constant curvature part and the gradually-varying curvature part have different reflection forms from each other, characterized in that a polarizing film is provided at the constant curvature part and a color filter is provided at the gradually-varying curvature part.

In accordance with the above structure, as the constant curvature part and the gradually-varying curvature part have different reflection forms from each other, it is possible to easily judge whether the present vision is obtained through the constant curvature part or the gradually-varying curvature part on the mirror surface, in accordance with the difference in the reflection form. Therefore, the occupant can more accurately perform judgment based on the present vision through the indirect visual device.

A polarizing film (e.g., a polarizing film 17 in the embodiment) is provided at the constant curvature part. Accordingly, diffuse reflection can be removed using the polarizing film, thereby effectively reducing the glare of light. In addition, the occupant can easily judge whether the area (on the reflecting mirror) which the occupant presently observes belongs to the constant curvature part or the gradually-varying curvature part, in accordance with presence or absence of diffuse reflection.

The polarizing film is provided at the constant curvature part. Therefore, major indirect vision by means of the constant curvature part can be a clear vision without diffuse reflection, through the polarizing film. In addition, it is possible to remove inconvenience in occupant's observation due to a combination of the gradually-varying curvature part and the polarizing film.

A color filter (e.g., a color filter 18 in the embodiment) is provided at the gradually-varying curvature part. Accordingly, the wavelength of the reflected light can be converted through the color filter, thereby improving easiness in occupant's observation, and the occupant can easily judge whether the area (on the reflecting mirror) which the occupant presently observes belongs to the constant curvature part or the gradually-varying curvature part, in accordance with a variation in color.

As, the color filter is provided at the gradually-varying curvature part, a peripheral visual field, which is reflected in the gradually-varying curvature part and has a distortion, can be more easily recognized.

As, according to the invention, a polarizing film (e.g., a polarizing film 17 in the embodiment) is provided at the constant curvature part; and
a color filter (e.g., a color filter 18 in the embodiment) is provided at the gradually-varying curvature part,
diffuse reflection in the constant curvature part can be removed, and simultaneously, in the gradually-varying curvature part, the wavelength of the reflected light can be converted through the color filter. Additionally, the occupant can more easily judge whether the area (on the reflecting mirror) which the occupant presently observes belongs to the constant curvature part or the gradually-varying curvature part, in accordance with presence or absence of diffuse reflection, and a variation in color.

Typically, the color filter has spectral characteristics, whose center wavelength range is 500 to 560 nm. Such a color filter has a high luminous efficiency regardless of daylight or scotopic vision, and thus it can make the occupant recognize a clear and bright image reflected in the reflecting mirror, regardless of day or night, weather conditions, or the like.

### BRIEF DESCRIPTION OF THE DRAWINGS

Fig. 1 is a perspective view showing a first embodiment of the indirect visual device in accordance with the present invention.
Fig. 2 includes a front view (A) and a sectional view (B) of the indirect visual device in the first embodiment.
Fig. 3 is a schematic diagram for explaining the function of a polarizing film used in the first embodiment.
Fig. 4 is a graph showing a relative luminous efficiency curve with respect to daylight vision, and a relative luminous efficiency curve with respect to scotopic vision.
Fig. 5 is a sectional view showing a part of the structure as a variation of the first embodiment.
Fig. 6 includes a front view (A) and a sectional view (B) of an indirect visual device as a comparative example.
Fig. 7 is a schematic view for explaining the function of an indirect visual device as a second example (not being an embodiment of the present invention) .
Fig. 8 is a diagram including an image (A) obtained when the driver looks at the indirect visual device of the second example through the left eye, an image (B) obtained when the driver looks at the same device through the right eye, and an image (C) which is actually recognized through both eyes.
Fig. 9 is a diagram including an image (A) obtained when the driver looks at an indirect visual device as a comparative example through the left eye, an image (B) obtained when the driver looks at the same device through the right eye, and an image (C) which is actually recognized through both eyes.

### DETAILED DESCRIPTION OF THE INVENTION

Hereinafter, an embodiment in accordance with the present invention and a further example of an indirect visual device will be described with reference to the appended figures. In the following explanation, directions such as a vertical or front-to-back direction are defined with respect to the vehicle's travel direction when no specific comment is provided.

### First embodiment

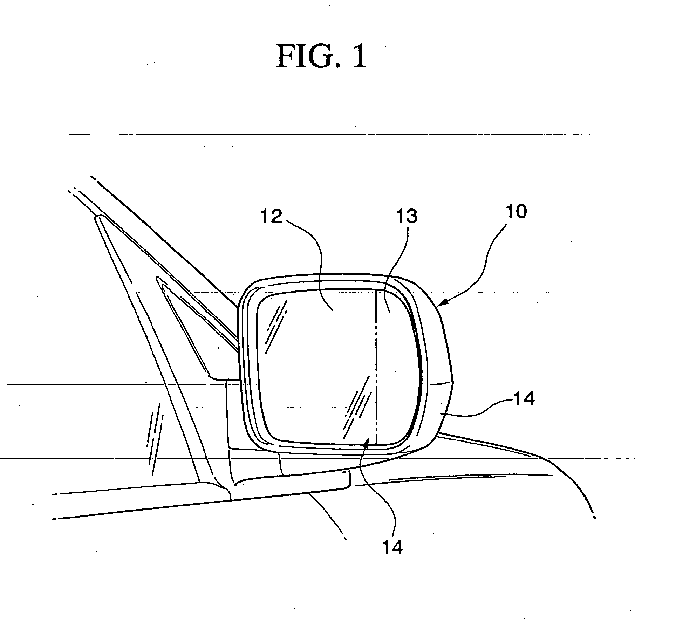

A first embodiment will be explained below with reference to Figs. 1 to 4.

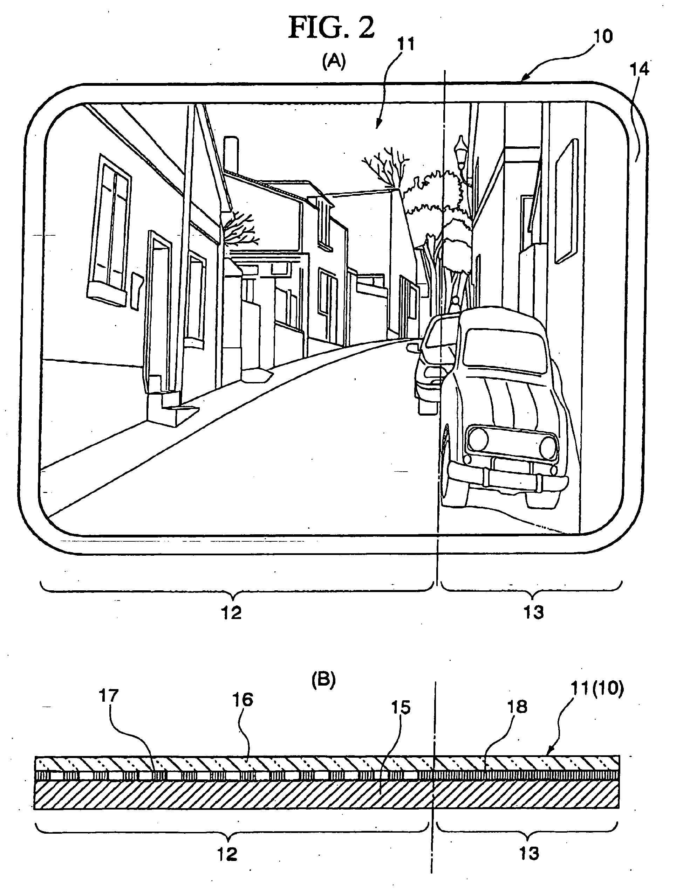

Fig. 1 is a perspective view of a part in a vehicle, which employs a door mirror 10 as a first embodiment of the indirect visual device in accordance with the present invention. Fig. 2 includes a front view (A) of the door mirror 10, and a sectional view (B) obtained when cutting a reflecting mirror 11 of the door mirror 10 into two parts along the horizontal direction. In Fig. 2, reference numeral 14 indicates a housing for holding the reflecting mirror 11 and a mirror supporting mechanism (not shown) of the door mirror 10.

As shown in Fig. 2, in the reflecting mirror 11 of the door mirror 10, an approximately two-third area, measured from the inner end (closer to the interior of the vehicle) in the vehicle's width direction toward the other end on the opposite side, is defined as a constant curvature part 12 having a substantially constant radius of curvature with respect to the mirror surface, and the remaining area on the outer side in the vehicle's width direction is defined as a gradually-varying curvature part 13, whose radius of curvature gradually decreases toward the outer end (i.e., on the side of the housing 14).

As shown in part (B) of Fig. 2, in the reflecting mirror 11, the main reflecting function of the constant curvature part 12 and the gradually-varying curvature part 3 is implemented by a metal layer 15, which is the bottom (i.e., lowest) layer. The entire surface of the reflecting mirror 11 is covered with a glass plate 16. Between the metal layer 15 and the glass plate 16, a polarizing film 17 and a color filter 18 are provided, which respectively correspond to the constant curvature part 12 and the gradually-varying curvature part 13.

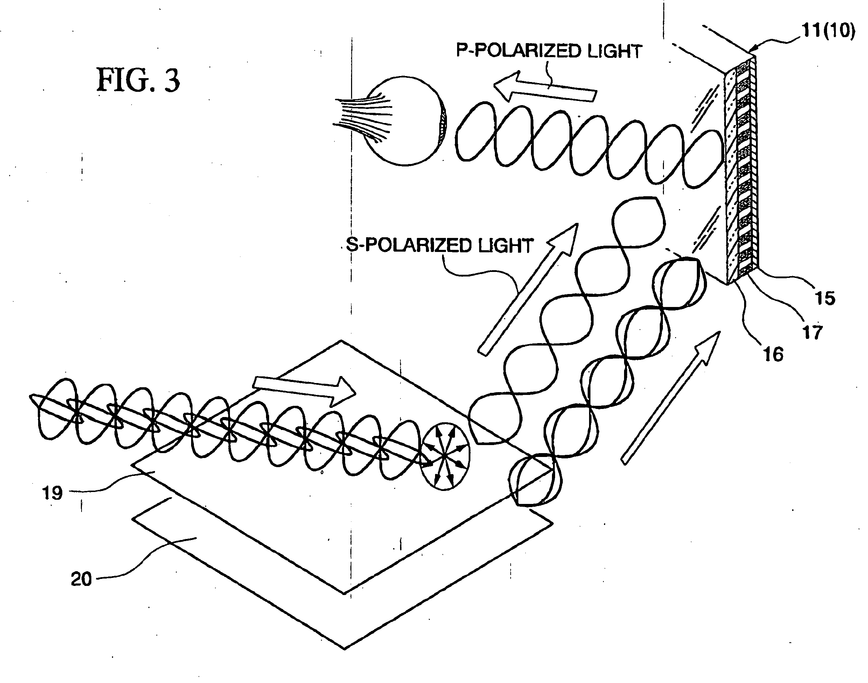

Fig. 3 is a schematic view for explaining the function of the door mirror 16, when observing a road surface 20, which includes a water film 19 such as a (rain) puddle, through the polarizing film 17 of the constant curvature part 12. As shown in Fig. 3, the polarizing film 17 of the constant curvature part 12 cuts off s-polarized light, included in light which was irregularly reflected by the water film 19 or the like on the road surface 20, thereby reducing reflection on the water film 19 or the like, or relevant glittering. The polarizing film 17 of the constant curvature part 12 can also reduce strong sunlight during the day, headlights at night, or diffuse (or irregular) reflection due to light reflected by snow, or the like, thereby improving visibility.

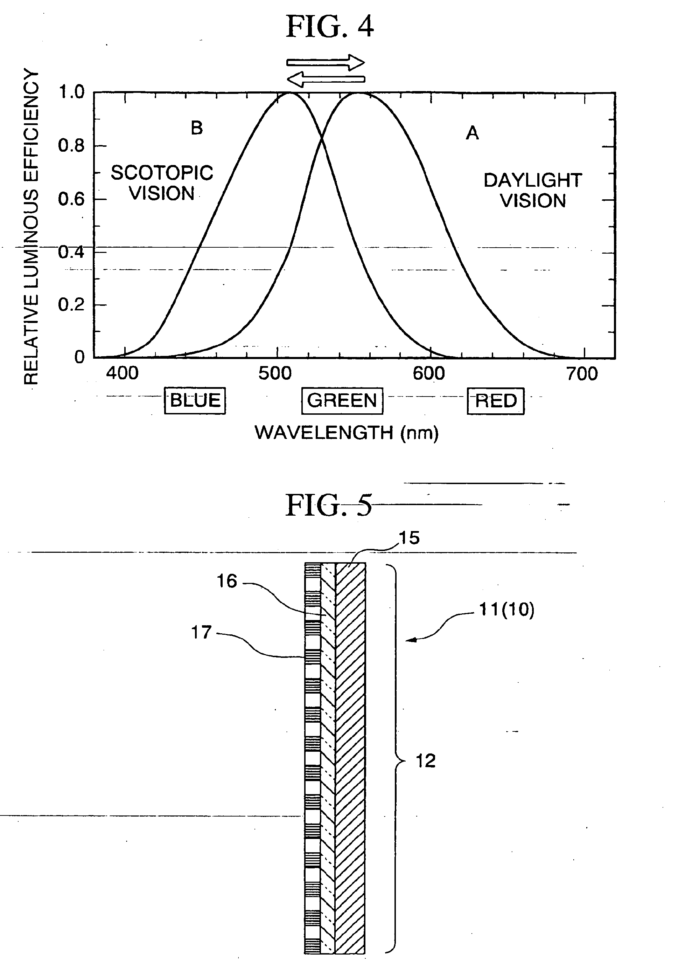

Fig. 4 shows a relative (or spectral) luminous efficiency curve A with respect to daylight vision, and a relative luminous efficiency curve B with respect to scotopic vision. As shown in Fig. 4, with respect to daylight vision, the maximum luminous efficiency is obtained at a wavelength of approximately 555 nm, while with respect to scotopic vision, the maximum luminous efficiency is obtained at a wavelength of approximately 507 nm.

The color filter 18 employed in the gradually-varying curvature part 13 has spectral characteristics, whose center wavelength range is set to 500 to 560 nm, in which the relative luminous efficiency is relatively high in either daylight vision or scotopic vision. Therefore, the gradually-varying curvature part 13 can make the relevant occupant recognize a clear and bright reflected image, regardless of day or night, weather conditions, or the like.

In the door mirror 10 having the above-described structure, a clear rear visual field, which has less distortion and provides a superior sense of distance, can be obtained via the constant curvature part 12, which has a large area and is closer to the interior of the vehicle. In addition, as the polarizing film 17 is provided at the constant curvature part 12, less diffuse reflection occurs, and thus a rear visual field having a high contrast can be provided. Therefore, in the constant curvature part 12, an occupant who looks at the reflecting mirror 11 does not receive much glare, and additionally, the occupant can easily recognize each line or character drawn on the road surface, or a state of the driver (i.e., the driver's eyes or movement) of a vehicle which follows the present vehicle.

Also in the door mirror 10, a wide-angle visual field from the back to each side of the vehicle can be obtained by means of the gradually-varying curvature part 13. In addition, the gradually-varying curvature part 13 has the color filter 18, which has spectral characteristics, whose center wavelength range is set to 500 to 560 nm. Therefore, a bright visual field having a high luminous efficiency can be obtained regardless of daylight or scotopic vision.

Furthermore, in the door mirror 10, as the polarizing film 17 is provided at the constant curvature part 12 and the color filter 18 is provided at the gradually-varying curvature part 13, the occupant can easily and accurately judge whether the area which the occupant presently observes belongs to the constant curvature part 12 or the gradually-varying curvature part 13, in accordance with presence or absence of diffuse reflection, and a variation in color.

In Fig. 6, parts (A) and (B) show a comparative example (which has been briefly explained before, as a conventional example), in which the constant curvature part 101 and the gradually-varying curvature part 102 are provided, and over the constant curvature part 102 and the gradually-varying curvature part 102, a color filter 105 is provided on a glass plate 104, which covers the front surface of a metal film 103. The color filter 105 uniformly reduces light in a wide wavelength range. If coloring concentration of the color filter 105 is increased so as to effectively reduce the glare of light, the entire visual field becomes dark. In addition, as the color filter 105 is continuously provided over the constant curvature part 101 and the gradually-varying curvature part 102, the boundary therebetween is indefinite.

In contrast, in the door mirror 10 of the present embodiment, as the color filter 18 is provided at the gradually-varying curvature part 13, and the polarizing film 17 is provided at the constant curvature part 12, the boundary therebetween is definite. Furthermore, as the color filter 18 at the gradually-varying curvature part 13 has spectral characteristics, whose center wavelength range is 500 to 560 nm, a visual field can be obtained, by which the relevant occupant can clearly and easily observe each object, while providing a sufficient effect of reducing the glare of light by means of the gradually-varying curvature part 13.

In the reflecting mirror 11 of the above embodiment, the polarizing film 17 and the color filter 18 are each provided on the metal film 15, and the glass plate 16 is further disposed on them. Instead, as shown in Fig. 5, which shows a part of the structure as a variation of this embodiment, the glass plate 16 may be disposed on the metal film 15, and the polarizing film 17 and a color filter (not shown) may be further disposed thereon.
In the above embodiment, the polarizing film 17 is provided at the constant curvature part 12 and the color filter 18 is provided at the gradually-varying curvature part 13 in which there is image distortion. This is most preferable in consideration of the visibility of each reflected image.

### Second example

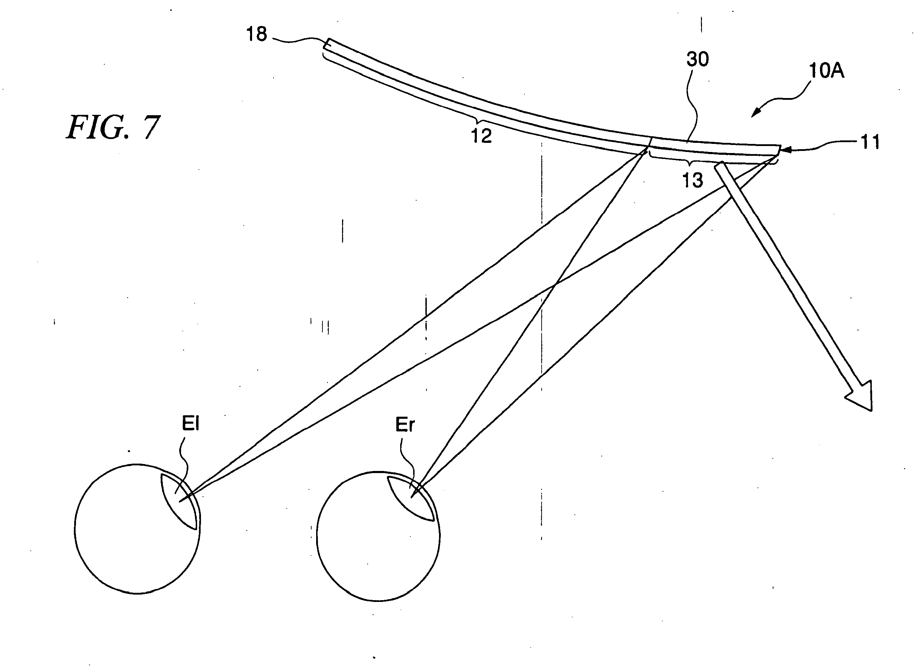

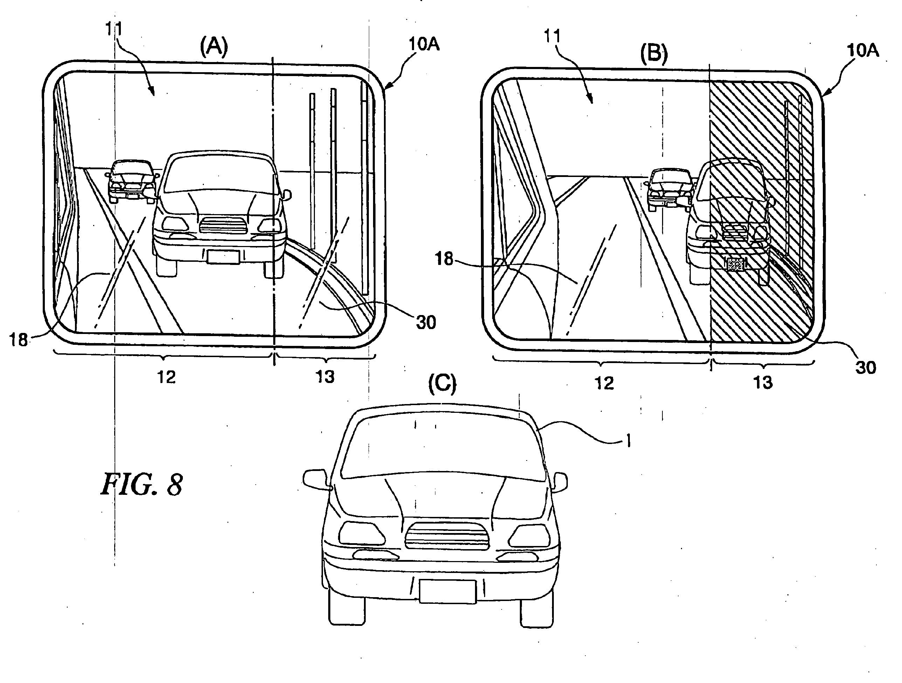

A second example (not being an embodiment of the present invention) will be explained below with reference to Figs. 7 and 8. Similar to the first embodiment, an indirect visual device is applied to a door mirror 10A of a vehicle in the present example.

Fig. 7 is a schematic view for explaining the function of a reflecting mirror 11 in the door mirror 10A. As shown in Fig. 7, in the reflecting mirror 11 of the door mirror 10A, an approximately two-third area, measured from the inner end in the vehicle's width direction toward the other end on the opposite side, is defined as the constant curvature part 12, and the remaining area on the outer side in the vehicle's width direction is defined as the gradually-varying curvature part 13, similar to the first embodiment, whose radius of curvature gradually decreases toward the outer end.

In the reflecting mirror 11, (i) a color filter 18 is provided at the constant curvature part 12, wherein the filter has spectral characteristics, whose center wavelength range is set to 500 to 560 nm, and (ii) an angular visual field control film 30 is provided at the gradually-varying curvature part 13, wherein the state of the film is switched between visible and invisible states depending on the viewing angle.

The angular visual field control film 30 is made by incorporating fine light restricting plates, which are inclined at a specific angle, into a film made of PET (poly (ethylene terephthalate)). In the present example, the light restricting plates (not shown) have an inclined angle rotated around the vertical axis with respect to the gradually-varying curvature part 13.

More specifically, the light restricting plates incorporated in the angular visual field control film 30 are inclined at an angle which almost matches the viewing angle of an eye of an occupant who sits on the driver's seat, where the eye is distant from the door mirror 10A in comparison with the other eye (of the occupant) which is closer to the door mirror 10A. That is, the light restricting plates are inclined from the viewing angle of the other eye of the occupant.

For example, as shown in Fig. 7, with respect to the door mirror 10A on the right side with respect to the driver's seat, the image on the reflecting mirror 11 is visible through the angular visual field control film 30 (i.e., the light restricting plates) from the left eye El of the driver, but is invisible from the right eye Er by means of the angular visual field control film 30 (i.e., the light restricting plates). In contrast, with respect to the door mirror 10A on the left side, the image on the reflecting mirror 11 is invisible from the left eye El, and is visible only from the right eye Er.

Fig. 8 includes an image (A) obtained when the driver looks at the door mirror 10A on the right side through the left eye, an image (B) obtained when the driver looks at the same door mirror 10A through the right eye, and an image (C) which is actually recognized through both eyes.

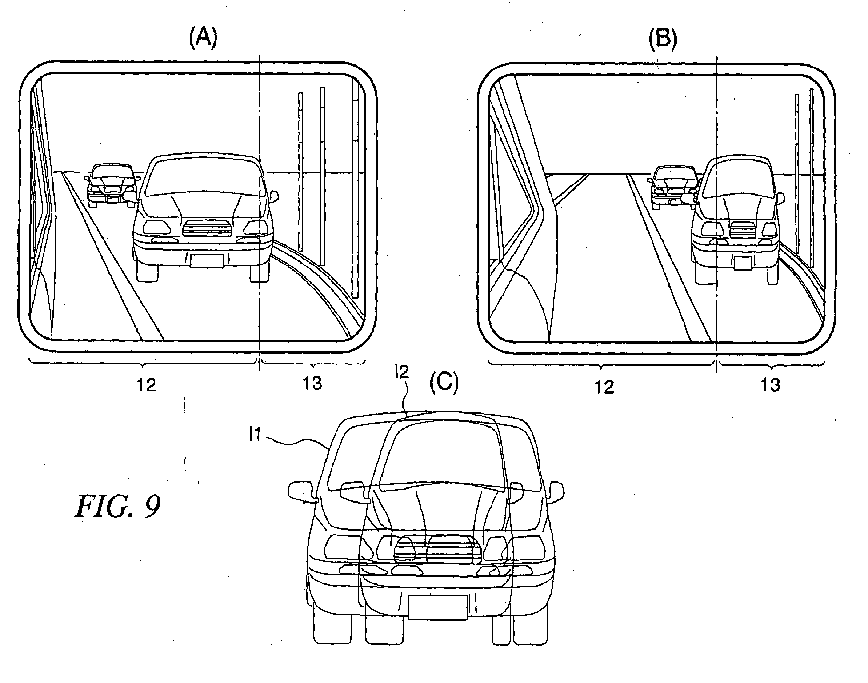

In the gradually-varying curvature part 13 at which the angular visual field control film 30 is provided, the reflected image is invisible through the right eye, as shown by the shaded part in the image (B) of Fig. 8. When such an angular visual field control film 30 is not provided at the gradually-varying curvature part 13 (see a comparative example shown in Fig. 9), the relevant occupant recognizes a double image (see overlapped images I1 and 12) due to binocular parallax. However, in the present example, as the visual field of one of the eyes through the gradually-varying curvature part 13 is blocked by the angular visual field control film 30, a single image I is always recognized by the relevant occupant.

Therefore, in the door mirror 10A, a clear rear visual field, which has less distortion and provides a superior sense of distance, can be obtained via the constant curvature part 12, which has a large area and is closer to the interior of the vehicle. In addition, as the color filter 18 having spectral characteristics, whose center wavelength range is 500 to 560 nm, is provided at the constant curvature part 12, a bright visual field having a high luminous efficiency can be obtained regardless of daylight or scotopic vision.

Also in the door mirror 10A, a wide-angle visual field from the back to each side of the vehicle can be obtained by means of the gradually-varying curvature part 13. In addition, the gradually-varying curvature part 13 has the angular visual field control film 30, a clear rear visual field can be obtained, which has no double image (due to binocular parallax) as described above.

In particular, in the gradually-varying curvature part 13, the curvature greatly varies toward the outer end in the width direction of the vehicle. Therefore, images of a target object through the right and left eyes do not coincide with each other, and a double image of the target object must be recognized. However, in the door mirror 10A employing the angular visual field control film 30 in the gradually-varying curvature part 13, such a problem can be effectively solved.

Therefore, when employing the door mirror 10A, it is possible to reliably relieve a mental stress or eye fatigue of the driver, produced when looking at the gradually-varying curvature part 13.

Also in the present example, the constant curvature part 12 and the gradually-varying curvature part 13 have different reflection forms from each other by means of the color filter 18 and the angular visual field control film 30. Therefore, the relevant occupant can easily and accurately judge whether the area which the occupant presently observes belongs to the constant curvature part 12 or the gradually-varying curvature part 13.

In addition, in the door mirror 10A of the present example, the angular visual field control film 30 is invisible from an eye (of the relevant occupant) which is relatively close to the film, while it is visible from the other eye which is relatively distant from the film. Therefore, the occupant can more easily observe a target image.

In the present example, the color filter 18 and the angular visual field control film 30 are respectively provided at the constant curvature part 12 and the gradually-varying curvature part 13. However, an angular visual field control film 30 and a color filter 18 may be respectively provided at the constant curvature part 12 and the gradually-varying curvature part 13.

When respectively providing the color filter 18 and the angular visual field control film 30 at the constant curvature part 12 and the gradually-varying curvature part 13 as in the present example, major indirect vision through the constant curvature part 12 can be reliably obtained using both eyes, and only a peripheral visual field through the gradually-varying curvature part 13 is recognized through a single eye. Therefore, a rear visual field through the door mirror 10A can be more easily observed.

While a preferred embodiment of the invention has been described and illustrated above, it should be understood that this is exemplary of the invention are is not to be considered as limiting. Additions, omissions, substitutions, and other modifications can be made without departing from the scope of the present invention. Accordingly, the invention is not to be considered as being limited by the foregoing description, and is only limited by the scope of the appended claims.

An indirect visual device (10) of a vehicle, includes a reflecting mirror (1) including a constant curvature part (12), which has a substantially constant radius of curvature over the mirror surface, and a gradually-varying curvature part (13), which joins the constant curvature part, and whose radius of curvature gradually decreases toward an end of this part. The constant curvature part and the gradually-varying curvature part have different reflection forms from each other. A polarizing film (17) is provided at the constant curvature part, and a color filter (18) is provided at the gradually-varying curvature part. Typically, the color filter has spectral characteristics, whose center wavelength range is 500 to 560 nm.

## Claims

1. An indirect visual device (10) of a vehicle, comprising:
a reflecting mirror (11) including a constant curvature part (12), which has a substantially constant radius of curvature over the mirror
surface, and a gradually-varying curvature part (13), which joins the constant curvature part (12), and whose radius of curvature gradually decreases toward an end of this part, wherein
the constant curvature part (12) and the gradually-varying curvature part (13) have different reflection forms from each other,
**characterized in that:**
a polarizing film (17) is provided at the constant curvature part (12); and
a color filter (18) is provided at the gradually-varying curvature part (13).

2. The indirect visual device (10) in accordance with Claim 1,
**characterized in that:**
the color filter (18) has spectral characteristics, whose center wavelength range is 500 to 560 nm.

## Patentansprüche

1. Indirekte optische Vorrichtung (10) eines Fahrzeugs, umfassend:
einen reflektierenden Spiegel (11), welcher einen Teil (12) mit konstanter Krümmung umfasst, der einen im Wesentlichen konstanten Krümmungsradius über die Spiegel-Fläche aufweist, und einen Teil (13) mit allmählich variierender Krümmung umfasst, der an den Teil (12) mit konstanter Krümmung anschließt, und dessen Krümmungsradius zu einem Ende dieses Teils hin allmählich abnimmt, wobei der Teil (12) mit konstanter Krümmung und der Teil (13) mit allmählich variierender Krümmung voneinander unterschiedliche Reflektions-Formen aufweisen,
**dadurch gekennzeichnet, dass:**
ein polarisierender Film (17) an dem Teil (12) mit konstanter Krümmung vorgesehen ist, und
ein Farbfilter (18) an dem Teil (13) mit allmählich variierender Krümmung vorgesehen ist.

2. Indirekte optische Vorrichtung (10) nach Anspruch 1,
**dadurch gekennzeichnet, dass:**
der Farbfilter (18) Spektraleigenschaften aufweist, deren zentraler Wellenlängenbereich 500 bis 560 nm ist.

## Revendications

1. Dispositif de vue indirecte (10) d'un véhicule, comprenant :
un miroir réfléchissant (11) incluant une partie de courbure constante (12), qui a un rayon de courbure sensiblement constant sur la surface du miroir, et une partie de courbure à variation progressive (13), qui rejoint la partie de courbure constante (12), et dont le rayon de courbure diminue progressivement vers une extrémité de cette partie, dans lequel
la partie de courbure constante (12) et la partie de courbure à variation progressive (13) ont des formes de réflexion différentes l'une de l'autre,
**caractérisé en ce que**
un film de polarisation (17) est prévu au niveau de la partie de courbure constante (12) ; et
un filtre couleur (18) est prévu au niveau de la partie de courbure à variation progressive (13).

2. Dispositif de vue indirecte (10) selon la revendication 1,
**caractérisé en ce que :**
le filtre couleur (18) a des caractéristiques spectrales, dont la gamme de longueurs d'onde centrale va de 500 à 560 nm.
